# EUROPEAN PATENT SPECIFICATION

(11) **EP 4 564 181 B1**
(45) Date of publication and mention of the grant of the patent: **02.09.2026**
(21) Application number: 24215028.2
(22) Date of filing: 25.11.2024
(51) Int. Cl.: G06F 12/127, G06F 12/1009

(54) **SYSTEMS, METHODS, AND APPARATUS FOR CACHING ON A STORAGE DEVICE**
SYSTEME, VERFAHREN UND VORRICHTUNG ZUR ZWISCHENSPEICHERUNG AUF EINER SPEICHERVORRICHTUNG
SYSTÈMES, PROCÉDÉS ET APPAREIL DE MISE EN CACHE SUR UN DISPOSITIF DE STOCKAGE

(30) Priority: 28.11.2023 US 202363603629 P; 24.10.2024 US 202418926110
(43) Date of publication of application: 04.06.2025
(73) Proprietor: Samsung Electronics Co., Ltd., Suwon-si, Gyeonggi-do 16677 (KR)
(72) Inventor: SOLTANIYEH, Mohammadreza, San Jose, CA 95134 (US); KACHARE, Ramdas, San Jose, CA 95134 (US); HUEN, Hingkwan, San Jose, CA 95134 (US)
(74) Representative: Kuhnen & Wacker Patent- und Rechtsanwaltsbüro PartG mbB

(56) References cited:
- US-A1- 2006 143 396
- US-A1- 2014 189 247

## Description

### TECHNICAL FIELD

This disclosure relates generally to storage devices, and more specifically to systems, methods, and apparatus for caching on a storage device.

### BACKGROUND

US 2006 / 0 143 396 A1 discloses a method and an apparatus to enable programmatic control of cache line eviction policies. A mechanism is disclosed that enables programmers to mark portions of code with different cache priority levels based on anticipated or measured access patterns for those code portions. Corresponding cues to assist in effecting the cache eviction policies associated with given priority levels are embedded in machine code generated from source- and/or assembly-level code. Cache architectures are disclosed that partition cache space into multiple pools, each pool being assigned a different priority. In response to execution of a memory access instruction, an appropriate cache pool is selected and searched based on information contained in the instruction's cue. On a cache miss, a cache line is selected from that pool to be evicted using a cache eviction policy associated with the pool. Implementations of the mechanism or described for both n-way set associative caches and fully-associative caches.

US 2014 / 0 189 247 A1 discloses an apparatus and method for implementing a scratchpad memory within a cache using priority hints. For example, a method according to one embodiment comprises: providing a priority hint for a scratchpad memory implemented using a portion of a cache; determining a page replacement priority based on the priority hint; storing the page replacement priority in a page table entry, PTE, associated with the page; and using the page replacement priority to determine whether to evict one or more cache lines associated with the scratchpad memory from the cache.

A page table is a data structure used by an operating system (OS) that may be used to store mappings between virtual addresses and physical addresses. System memory may be used to store a page table and other data structures. If a storage device is used as expanded memory, the storage device may be used to store some of the data structures.

The above information disclosed in this Background section is only for enhancement of understanding of the background of the inventive principles and therefore it may contain information that does not constitute prior art.

### SUMMARY

The invention is set out in the appended claims.

In some partial aspects, the techniques described herein relate to a method including determining that data is related to an operation of an operating system; determining a score for the data; and writing the data to memory media based on the score, wherein the memory media may be used as expanded memory. In some aspects, the data is first data; the score is a first score; and the method further includes determining that second data is related to an operation of an application; determining a second score for the second data; and writing the data to storage media based on the score. In some aspects, the first data uses a first cache; and the second data uses a second cache. In some aspects, the first cache applies a different cache replacement policy than the second cache. In some aspects, the data includes at least one page table. In some aspects, the at least one page table includes one or more entries; the one or more entries corresponds to data accessed above a threshold; and the method further includes writing data corresponding to the data accessed above a threshold from storage media to the memory media. In some aspects, the at least one page table includes one or more entries; the one or more entries corresponds to data accessed above a threshold; and the method further includes storing data corresponding to the data accessed above a threshold in the memory media. In some aspects, the at least one page table includes one or more entries; the one or more entries corresponds to data accessed below a threshold; and the method further includes modifying data corresponding to the data accessed below a threshold from the memory media to storage media.

In some partial aspects, the techniques described herein relate to a system including a host device including a one or more circuits configured to associate virtual addresses to physical addresses on a memory device; and the memory device including storage media and memory media; where the memory device is configured to perform one or more operations including receiving data related to an operation of an operating system; determining a score for the data; and writing the data to the memory media based on the score. In some aspects, the data is first data; the score is a first score; and the memory device is further configured to perform one or more operations including receiving second data related to an operation of an application; determining a second score for the second data; and writing the data to the storage media based on the score. In some aspects, the first data uses a first cache; and the second data uses a second cache. In some aspects, the first cache applies a different cache replacement policy than the second cache. In some aspects, the data includes at least one page table, the at least one page table being used to associate the virtual addresses to physical addresses. In some aspects, the at least one page table includes one or more entries; the one or more entries corresponds to data accessed above a threshold; and the memory device is further configured to perform one or more operations including writing data corresponding to the data accessed above a threshold from the storage media to the memory media. In some aspects, the at least one page table includes one or more entries; the one or more entries corresponds to data accessed above a threshold; and the memory device is further configured to perform one or more operations including storing data corresponding to the data accessed above a threshold in the memory media. In some aspects, the at least one page table includes one or more entries; the one or more entries corresponds to data accessed below a threshold; and the memory device is further configured to perform one or more operations including modifying data corresponding to the data accessed below a threshold from the memory media to the storage media.

In some partial aspects, the techniques described herein relate to a device including memory media; storage media; and at least one circuit configured to perform one or more operations including receiving a data structure related to an operation of an operating system; determining a score for the data structure; and writing at least a portion of the data structure to the memory media based on the score. In some aspects, the score is a first score; and the at least one circuit is further configured to perform one or more operations including receiving data related to an operation of an application; determining a second score for the data; comparing the first score and second score; and writing the data to the storage media based on the second score. In some aspects, the data structure uses a first cache; and wherein the data related to an operation of an application uses a second cache. In some aspects, the first cache applies a different cache replacement policy than the second cache. In some aspects, the data structure related to an operation of an operating system and data related to an operation of an application use a cache comprising at least one of a type and a priority level.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
FIG. **1** illustrates an embodiment of a storage device scheme in accordance with example embodiments of the disclosure.
FIG. **2** illustrates another embodiment of a storage device scheme in accordance with example embodiments of the disclosure.
FIG. **3** illustrates another embodiment of a storage device scheme in accordance with example embodiments of the disclosure.
FIG. **4** illustrates an example of a page table walk in accordance with example embodiments of the disclosure.
FIG. **5** illustrates an example memory request in accordance with example embodiments of the disclosure.
FIG. **6** illustrates an example address range in accordance with example embodiments of the disclosure.
FIG. **7** illustrates an example of a register used for caching on a storage device in accordance with example embodiments of the disclosure.
FIG. **8** illustrates an example of a unified cache in accordance with example embodiments of the disclosure.
FIG. **9a** illustrates an example of an operating system cache in accordance with example embodiments of the disclosure.
FIG. **9b** illustrates an example of an application cache in accordance with example embodiments of the disclosure.
FIG. **10** illustrates an example flowchart of caching on a storage device in accordance with example embodiments of the disclosure.

### DETAILED DESCRIPTION

In some embodiments, a storage device may be used as device memory (e.g., as a memory expander for a host). When the storage device is treated as device memory, the host may write data that would typically be written to device memory to the storage device. An example of a type of data that may be written to the storage device may include page tables. For example, an application and/or OS on the host may reference memory on the storage devices using virtual addresses. However, the storage device may use physical addresses to access the memory. To facilitate the translation of virtual addresses to physical addresses, a data structure, referred to as a page table, may be used to store mappings of virtual addresses to physical addresses. In some embodiments, one or more entries of the page table may be stored on the storage device.

In some embodiments, when data, such as page table entries, are stored on a storage device, a host may experience increased latency when accessing memory on the storage device instead of device memory on the host (e.g., accessing device memory is typically faster than accessing memory on a storage device). In some embodiments, the storage device may mitigate some of this latency by utilizing memory media (e.g., cache media) to store frequently accessed regions of memory. According to embodiments of the disclosure, mechanisms to improve the cache performance for data on a storage device may be used. For example, in some embodiments, methods to differentiate between OS and application accesses and to place higher priority data on the cache media may be used. In some embodiments, methods to minimize the occurrences of moving higher priority data to slower memory may be used. Furthermore, in some embodiments, methods to allow the OS to communicate important information to the storage device to increase the device cache hit rate may be used.

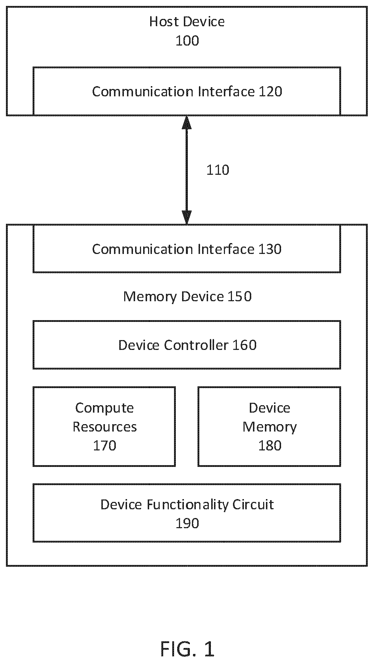

FIG. **1** illustrates an embodiment of a storage device scheme in accordance with example embodiments of the disclosure. The embodiment illustrated in FIG. **1** may include one or more host devices **100** and one or more storage devices **150** configured to communicate using one or more communication connections **110.**

In some embodiments, a host device **100** may be implemented with any component or combination of components that may utilize one or more features of a storage device 150. For example, a host may be implemented with one or more of a server, a storage node, a compute node, a central processing unit (CPU), a workstation, a personal computer, a tablet computer, a smartphone, and/or the like, or multiples and/or combinations thereof.

In some embodiments, a storage device **150** may include a communication interface **130,** memory **180** (some or all of which may be referred to as device memory), one or more compute resources **170** (which may also be referred to as computational resources), a device controller **160,** and/or a device functionality circuit **190.** In some embodiments, the device controller **160** may control the overall operation of the storage device **150** including any of the operations, features, and/or the like, described herein. For example, in some embodiments, the device controller **160** may parse, process, invoke, and/or the like, commands received from the host devices **100.**

In some embodiments, the device functionality circuit **190** may include any hardware to implement the primary function of the storage device **150.** For example, the device functionality circuit **190** may include storage media such as magnetic media (e.g., if the storage device **150** is implemented as a hard disk drive (HDD) or a tape drive), solid state media (e.g., one or more flash memory devices), optical media, and/or the like. For instance, in some embodiments, a storage device may be implemented at least partially as a solid-state drive (SSD) based on not-AND (NAND) flash memory, persistent memory (PMEM) such as cross-gridded nonvolatile memory, memory with bulk resistance change, phase change memory (PCM), or any combination thereof. In some embodiments, the device controller 160 may include a media translation layer such as a flash translation layer (FTL) for interfacing with one or more flash memory devices. In some embodiments, the storage device 150 may be implemented as a computational storage drive, a computational storage processor (CSP), and/or a computational storage array (CSA).

As another example, if the storage device **150** is implemented as an accelerator, the device functionality circuit **190** may include one or more accelerator circuits, memory circuits, and/or the like.

The compute resources **170** may be implemented with any component or combination of components that may perform operations on data that may be received, stored, and/or generated at the storage device **150.** Examples of compute engines may include combinational logic, sequential logic, timers, counters, registers, state machines, complex programmable logic devices (CPLDs), field programmable gate arrays (FPGAs), application specific integrated circuits (ASICs), embedded processors, microcontrollers, central processing units (CPUs) such as complex instruction set computer (CISC) processors (e.g., x86 processors) and/or a reduced instruction set computer (RISC) processors such as ARM processors, graphics processing units (GPUs), data processing units (DPUs), neural processing units (NPUs), tensor processing units (TPUs), and/or the like, that may execute instructions stored in any type of memory and/or implement any type of execution environment such as a container, a virtual machine, an operating system such as Linux, an Extended Berkeley Packet Filter (eBPF) environment, and/or the like, or a combination thereof.

In some embodiments, the memory **180** may be used, for example, by one or more of the compute resources **170** to store input data, output data (e.g., computation results), intermediate data, transitional data, and/or the like. The memory **180** may be implemented, for example, with volatile memory such as dynamic random-access memory (DRAM), static random-access memory (SRAM), and/or the like, as well as any other type of memory such as nonvolatile memory.

In some embodiments, the memory **180** and/or compute resources **170** may include software, instructions, programs, code, and/or the like, that may be performed, executed, and/or the like, using one or more compute resources (e.g., hardware (HW) resources). Examples may include software implemented in any language such as assembly language, C, C++, and/or the like, binary code, FPGA code, one or more operating systems, kernels, environments such as eBPF, and/or the like. Software, instructions, programs, code, and/or the like, may be stored, for example, in a repository in memory **180** and/or compute resources **170.** In some embodiments, software, instructions, programs, code, and/or the like, may be downloaded, uploaded, sideloaded, pre-installed, built-in, and/or the like, to the memory **180** and/or compute resources **170.** In some embodiments, the storage device **150** may receive one or more instructions, commands, and/or the like, to select, enable, activate, execute, and/or the like, software, instructions, programs, code, and/or the like. Examples of computational operations, functions, and/or the like, that may be implemented by the memory **180,** compute resources **170,** software, instructions, programs, code, and/or the like, may include any type of algorithm, data movement, data management, data selection, filtering, encryption and/or decryption, compression and/or decompression, checksum calculation, hash value calculation, cyclic redundancy check (CRC), weight calculations, activation function calculations, training, inference, classification, regression, and/or the like, for artificial intelligence (AI), machine learning (ML), neural networks, and/or the like.

In some embodiments, a communication interface **120** at a host device **100,** a communication interface **130** at a storage device **150,** and/or a communication connection **110** may implement, and/or be implemented with, one or more interconnects, one or more networks, a network of networks (e.g., the internet), and/or the like, or a combination thereof, using any type of interface, protocol, and/or the like. For example, the communication connection **110,** and/or one or more of the interfaces **120** and/or **130** may implement, and/or be implemented with, any type of wired and/or wireless communication medium, interface, network, interconnect, protocol, and/or the like including Peripheral Component Interconnect Express (PCIe), NVMe, NVMe over Fabric (NVMe-oF), Compute Express Link (CXL), and/or a coherent protocol such as CXL.mem, CXL.cache, CXL.io and/or the like, Gen-Z, Open Coherent Accelerator Processor Interface (OpenCAPI), Cache Coherent Interconnect for Accelerators (CCIX), and/or the like, Advanced eXtensible Interface (AXI), Direct Memory Access (DMA), Remote DMA (RDMA), RDMA over Converged Ethernet (ROCE), Advanced Message Queuing Protocol (AMQP), Ethernet, Transmission Control Protocol/Internet Protocol (TCP/IP), FibreChannel, InfiniBand, Serial ATA (SATA), Small Computer Systems Interface (SCSI), Serial Attached SCSI (SAS), iWARP, any generation of wireless network including 2G, 3G, 4G, 5G, 6G, and/or the like, any generation of Wi-Fi, Bluetooth, near-field communication (NFC), and/or the like, or any combination thereof. In some embodiments, a communication connection **110** may include one or more switches, hubs, nodes, routers, and/or the like.

In some embodiments, a storage device **150** may be implemented in any physical form factor. Examples of form factors may include a 3.5 inch, 2.5 inch, 1.8 inch, and/or the like, storage device (e.g., storage drive) form factor, M.2 device form factor, Enterprise and Data Center Standard Form Factor (EDSFF) (which may include, for example, E1.S, E1.L, E3.S, E3.L, E3.S 2T, E3.L 2T, and/or the like), add-in card (AIC) (e.g., a PCIe card (e.g., PCIe expansion card) form factor including half-height (HH), half-length (HL), half-height, half-length (HHHL), and/or the like), Next-generation Small Form Factor (NGSFF), NF1 form factor, compact flash (CF) form factor, secure digital (SD) card form factor, Personal Computer Memory Card International Association (PCMCIA) device form factor, and/or the like, or a combination thereof. Any of the computational devices disclosed herein may be connected to a system using one or more connectors such as SATA connectors, SCSI connectors, SAS connectors, M.2 connectors, EDSFF connectors (e.g., 1C, 2C, 4C, 4C+, and/or the like), U.2 connectors (which may also be referred to as SSD form factor (SSF) SFF-8639 connectors), U.3 connectors, PCIe connectors (e.g., card edge connectors), and/or the like.

Any of the storage devices disclosed herein may be used in connection with one or more personal computers, smart phones, tablet computers, servers, server chassis, server racks, datarooms, datacenters, edge datacenters, mobile edge datacenters, and/or any combinations thereof.

In some embodiments, a storage device **150** may be implemented with any device that may include, or have access to, memory, storage media, and/or the like, to store data that may be processed by one or more compute resources **170.** Examples may include memory expansion and/or buffer devices such as CXL type 2 and/or CXL type 3 devices, as well as CXL type 1 devices that may include memory, storage media, and/or the like.

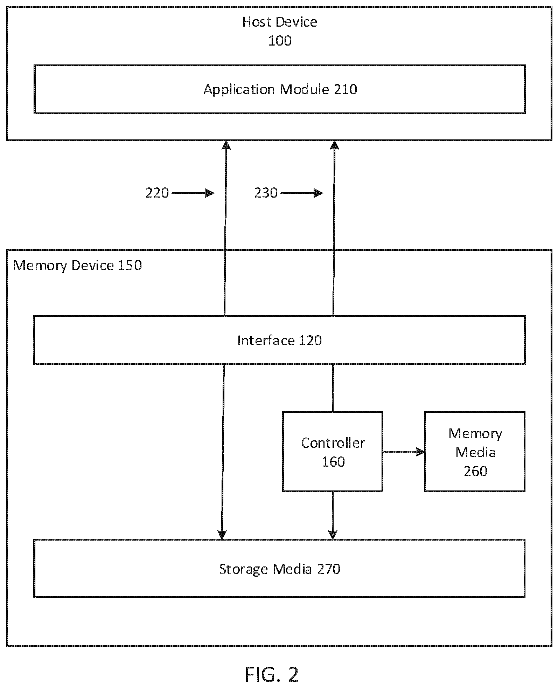

FIG. **2** illustrates another embodiment of a storage device scheme in accordance with example embodiments of the disclosure. The elements illustrated in FIG. **2** may be similar elements to those illustrated in FIG. **1** in which similar elements may be indicated by reference numbers ending in, and/or containing, the same digits, letters, and/or the like. In some embodiments, the host device **100** may include an application module **210;** and the storage device **150** may include an interface **120,** controller **160,** memory media **260** (e.g., cache media), and/or storage media **270.** In some embodiments, the interface **120** and/or controller **160** may be implemented on one or more circuits of the storage device **150.** In some embodiments, the one or more circuits may include one or more FPGAs, ASICs, and/or SOCs.

In some embodiments, the memory media **260** may be relatively fast memory such as DRAM and the storage media **270** may be slower non-volatile memory, such as NAND flash memory. In some embodiments, the memory media **260** may be used as a cache to store data accessed above a threshold in the faster memory. In some embodiments, the application module **210** may run an application that may access data from the storage device **150** (e.g., send a request to the storage device **150).** For example, in some embodiments, the application module **210** may request data from the storage device **150** by using an I/O block access request **220** to retrieve data from the storage media **270.** In some embodiments, the application module **210** may use a memory access request received at the controller **160** to retrieve data from the memory media **260.** In particular, in some embodiments, in response to receiving a memory access request **230,** the storage device **150** may send a request to the controller **160** to check the memory media **260** for data corresponding to the request. In some embodiments, in response to a cache hit (e.g., the data is found on the memory media **260),** the data may be returned from the memory media **260.** In some embodiments, in response to a cache miss (e.g., the data is not found on the memory media **260),** the controller **160** may copy the data from the storage media **270** to the memory media **260** and return the data from the memory media **260.**

In some embodiments, the storage device **150** may be advertised as system memory (e.g., device memory). In other words, the storage device **150** may appear to the host device **100** as an additional memory node and be managed by the OS non-uniform memory architecture (NUMA) memory management. In some embodiments, if the storage device **150** appears to the host device **100** as a memory node, the host device **100** may store data, such as one or more of its data structures, on the storage device **150.** In some embodiments, at least a portion of a data structure, such as a page table (e.g., one or more entries of the page table), may be stored on the storage device **150.**

In some embodiments, the translation of virtual addresses to physical addresses may be managed by a memory management hardware unit (MMU). In some embodiments, an MMU may use a cache, e.g., a translation lookaside buffer (TLB), to store recently accessed page table entries. However, in some embodiments, the number of virtual addresses (e.g., when the host device **100** is attached to storage devices with large memory capacity) may require a large number of entries in the page table, where the number of entries may not fit in the TLB. Thus, in some embodiments, page table entries may be stored, in part, in system memory, such as the storage device **150.** In some embodiments, searching page table entries on the storage device **150** instead of on the TLB may affect the overall system performance (e.g., page table lookups may be slower on the storage device **150** instead of on the TLB).

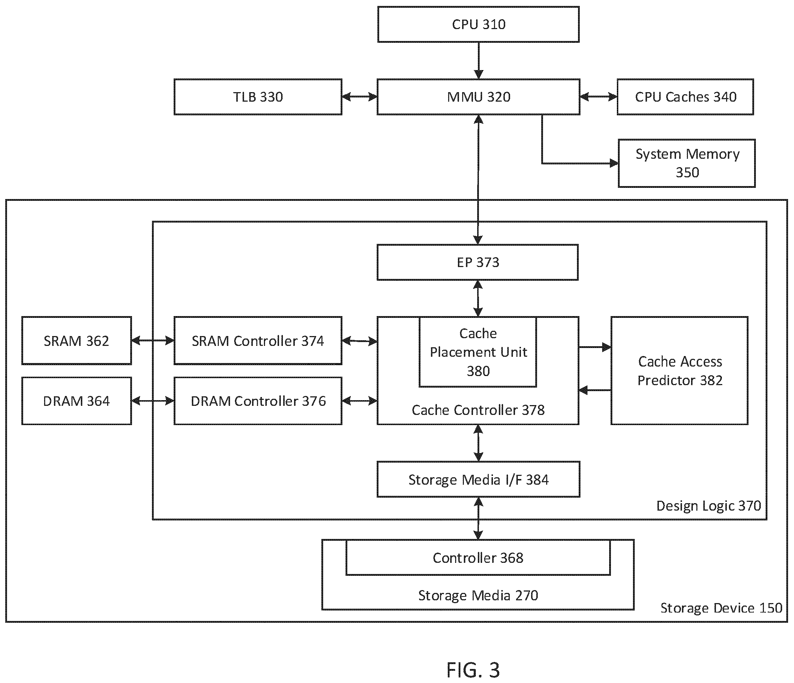

Fig. **3** illustrates another embodiment of a storage device scheme in accordance with example embodiments of the disclosure. The elements illustrated in FIG. **3** may be similar elements to those illustrated in FIGs. **1** and **2** in which similar elements may be indicated by reference numbers ending in, and/or containing, the same digits, letters, and/or the like. FIG. **3** includes a CPU **310,** MMU **320,** TLB **330,** one or more CPU caches **340,** and/or system memory **350.** In some embodiments, the CPU **310,** MMU **320,** TLB **330,** one or more CPU caches **340,** and/or system memory **350** may be implemented on a host device, such as host device **100** in FIGs. **1** and **2****.** In some embodiments, the storage device **150** may further include one or more circuits (e.g., design logic **370),** SRAM **362** and/or DRAM **364.** In some embodiments, the SRAM **362** and/or DRAM **364** may be part of the memory media **260** in FIG. **2****.** In some embodiments, the design logic **370** may include an endpoint (EP) **373,** SRAM controller **374,** DRAM controller **376,** cache controller **378,** cache access predictor **382,** and/or storage media interface (I/F) **384.** In some embodiments, the storage media **270** may include a controller **368.** In some embodiments, the cache controller **378** may be the controller **160** in FIG. **2****.** In some embodiments, the cache controller **378** may include a cache placement unit **380.**

In some embodiments, the MMU **320** may be responsible for some memory operations for the CPU **310.** For example, the MMU **320** may be responsible for translating virtual addresses used by the CPU **310** to physical addresses. In some embodiments, the MMU **320** may use the TLB **330** for some virtual-to-physical translations of addresses. For example, in some embodiments, the TLB **330** may store recent translations of virtual addresses to physical addresses. In some embodiments, the TLB **330** may be part of the MMU **320.** In some embodiments, the TLB **330** may store translations between the CPU **310** and the one or more CPU caches **340,** between the one or more CPU caches **340** and the system memory **350,** and/or between the different levels of the one or more CPU caches **340.** In some embodiments, when the storage device **150** is used as expanded memory, the TLB **330** may also store translations between the host and the storage device **150.** In some embodiments, when a request containing a virtual address is received, the MMU **320** may search the TLB **330** for the virtual address. In some embodiments, if the virtual address is found in the TLB **330,** a TLB hit occurs and the corresponding physical address may be returned by the TLB **330.** In some embodiments, if the virtual address is not found in the TLB **330,** e.g., a TLB miss, a page table may be searched. If the address is found in the page table, then, in some embodiments, the address may be written to the TLB **330.**

In some embodiments, data in the one or more CPU caches **340** may be accessed, reducing latency on the host. For example, in some embodiments, the one or more CPU caches **340** and/or system memory **350** may contain some or all of the page table. In some embodiments, entries of the page table may be grouped into one or more page tables. In other words, a page table may be a multilevel page table, where the one or more page table entries are stored in multiple page tables. In some embodiments, the multilevel page table may be hierarchical. In some embodiments, a top level page table may be searched for the virtual address. In some embodiments, if the virtual address is found in the top level page table, a next level page table may be searched. In some embodiments, if the virtual address is found in the next level page table, lower level page tables may be searched until a last level page table is searched. In some embodiments, if the last level page table does not contain the virtual address, an error, e.g., a page fault, may be returned. The aforementioned process may be referred to as a page table walk. In some embodiments, the page table walk may be performed by hardware. In some embodiments, if, for example, the multilevel page table has four levels, a page table walk may need four memory accesses to retrieve a page table entry from the last level page table. In some embodiments, a bit map be stored in a page table entry that indicates the presence and/or accessibility of a page in memory, as shown in Table 1.

**Table 1**

| **Bit** | **Function** |
|---|---|
| _PAGE_PRESENT | Page is resident in memory and not swapped out |
| _PAGE_PROTNONE | Page is resident but not accessible |
| _PAGE_RW | Set if the page may be written to |
| _PAGE_USER | Set if the page is accessible from user space |
| _PAGE_DIRTY | Set if the page is written to |
| _PAGE_ACCESSED | Set if the page is accessed |

In some embodiments, the storage device **150** may include one or more types of cache media, e.g., SRAM **362** and DRAM **364.** In some embodiments, SRAM **362** and DRAM **364** may each have their own controller, e.g., SRAM controller **374** and DRAM controller **376,** respectively to handle communication between the cache controller **378** and the SRAM **362** and DRAM **364.** For example, in some embodiments, a request for data may be passed by the cache controller **378** to the SRAM controller **374** to search for the data on the SRAM **362.** In some embodiments, the SRAM **362** and DRAM **364** may not be exposed to a host. In other words, the storage device **150** may determine where data is located. In some embodiments, a memory request may be received by the cache controller **378.** In some embodiments, the cache controller **378** may send the request to the SRAM **362** and DRAM **364.** In some embodiments, if the data is found on the SRAM **362** or DRAM **364,** the data may be returned from the SRAM **362** or DRAM **364.** In some embodiments, if the data is not found on the SRAM **362** or DRAM **364,** the request may be sent, using the storage media I/F **384,** to the storage media **270.** In some embodiments, the cache controller **378** may also be responsible for lookup, insertion, and eviction of data blocks from the cache media and be responsible for managing the cache metadata. In some embodiments, the cache controller **378** may maintain a cache policy (e.g., cache placement policy) for managing the device cache. In some embodiments, the MMU **320** may be responsible for including additional attributes in the memory requests sent to the storage device **150.**

In some embodiments, the storage device **150** may include a cache policy engine or cache access predictor **382.** In some embodiments, the cache access predictor **382** may assist the cache controller **378** to improve the cache hit rate. In some embodiments, the cache access predictor **382** may be used to predict future accesses and issue prefetch or evict commands to the cache controller **378.** In some embodiments, the cache controller **378** may provide information to the cache access predictor **382** about incoming memory requests from the host and respond to queries about the status of the data blocks in the cache.

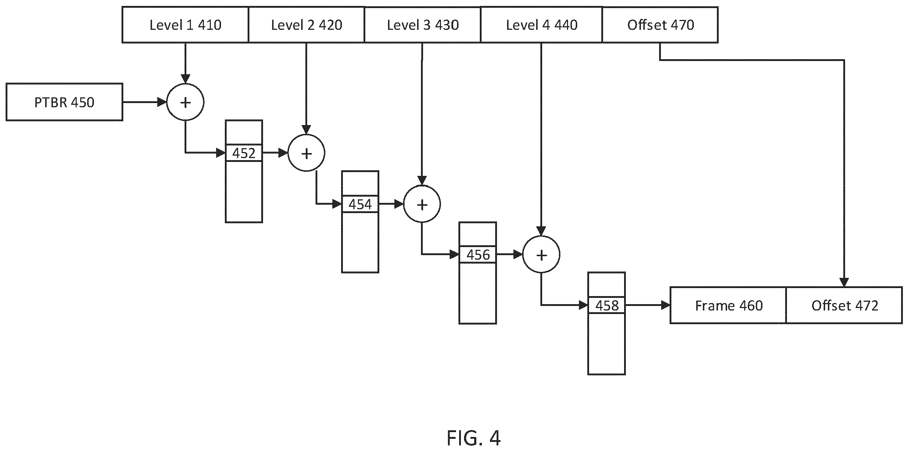

FIG. **4** illustrates an example of a page table walk in accordance with example embodiments of the disclosure. In some embodiments, a virtual address may include a level 1 offset **410,** level 2 offset **420,** level 3 offset **430,** level 4 offset **440,** and/or offset **470.** In some embodiments, in order to find a physical address using a multilevel page table, a page table base register (PTBR) **450** may be used as a starting location. In some embodiments, the PTBR **450,** using the level 1 offset **410,** may be used to access a page table entry (PTE) **452** in a level 1 page table. In some embodiments, the base address from the PTE **452** and level 2 offset **420** may be used to access a PTE **454** in a level 2 page table. In some embodiments, the base address from the PTE **454** and level 3 offset **430** may be used to access a PTE **456** in a level 3 page table. In some embodiments, the PTE **456** and level 4 offset **440** may be used to access a PTE **458** in a level 4 page table. In some embodiments, the PTE **458** and offset **470** may be used to obtain the physical address. The physical address may include the frame number **460** and offset **472.** In some embodiments, to get the physical address from the virtual address, in this example, four memory accesses may be required. In the aforementioned example, the multilevel page table included 4 levels. However, it is within the scope of the disclosure that a page table may have a different number of levels. In some embodiments, each process may have its own page table.

In some embodiments, the page table may be divided into one or more page tables. In some embodiments, one or more of the page tables may be stored on a storage device, such as the storage device **150** in FIG. **1****.** For a physical address to be searched in a page table, the page tables stored on the storage device may be searched. In some embodiments, since the storage device may not be as fast as the device memory on the host, the host may experience latency from accessing the storage device. Thus, to minimize the latency, in some embodiments, the storage device may ensure that data accessed above a threshold, such as a page table, may be stored in cache media instead of storage media on the storage device.

In some embodiments, when a memory access request is sent by, e.g., the OS, the request may include a host physical address, an opcode (e.g., read or write), and other attributes. In some embodiments, a source identifier and score may also be included in the request. For example, a source identifier may identify where the request is received from. For example, if the request is received due to a TLB miss, the source identifier may identify the TLB as the source of the miss. In some embodiments, if the request is due to a data cache miss, the cache may be identified as the source. In some embodiments, other source identifiers may be used to identify the source of the request. For example, the MMU may notify the storage device if the memory requests are initiated from a data cache miss (i.e., the last level cache miss) or a TLB miss. In some embodiments, the MMU unit may include an additional bit to indicate this information in the request sent to the storage device. In some embodiments, a memory access protocol may be used to provide this information to the storage device. In some embodiments, the source identifier and score may be added to the protocol or be integrated in the current protocol using reserved bits. In some embodiments, one of the attributes may be the access type information. In some embodiments, the access type may indicate if the memory request belongs to OS or a user's application. In some embodiments, in addition to this information, bits may be used to indicate the priority score of the memory accesses. For example, using two bits for the priority attribute, up to four categories may be provided (e.g., highest importance, high importance, low importance, lowest importance).

In some embodiments, the MMU may include additional information in the request to the storage device to better manage its device cache. For example, the page table level ID may be included in the memory requests. In some embodiments, it may be more efficient to cache entries in the upper levels of the page table (e.g., level **1 410** or level 2 **420** in FIG. **4****).** In some embodiments, the MMU may include this information in each memory request. In some embodiments, the memory device may use this information to prioritize the entries in the cache accordingly.

In some embodiments, the score may be used to identify a priority of the data. For example, a level 1 page table may have a higher priority so the score may reflect the higher priority. The system may use the priority score to determine which data is stored in a cache and which data may be stored in, e.g., storage media.

In some embodiments, additional attributes to each incoming memory request may be included. These additional attributes may carry necessary information to notify the storage device if the memory access belongs to the OS or an application. In some embodiments, the attributes may carry information about the importance of the data passed by the software or the OS to the device cache controller. In some embodiments, the MMU may be responsible for including the additional attributes in the memory requests sent to the memory device.

In some embodiment, one or more circuits on the host (e.g., the MMU **320** in FIG. **3****)** may be modified to receive the additional information in the request. For example, in addition to the host physical address, an opcode (e.g., read or write), and other attributes, a source identifier and score may also be included in the request. The MMU may use this additional information to place data in the cache and storage device.

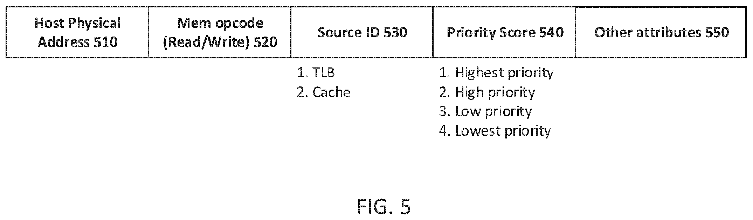

FIG. **5** illustrates an example memory request in accordance with example embodiments of the disclosure. In some embodiments, a storage device may receive a memory request. In some embodiments, the memory request may include attributes such as a host physical address **510,** memory opcode (read/write) **520,** and/or other attributes **550.** In some embodiments, a memory request may also include a source ID **530** and a priority score **540.** In some embodiments, the source ID **530** may indicate where the memory request originated. For example, if the request originated from a TLB miss, the source ID **530** may have a value representing a TLB miss, e.g., a first value. If the request originated from a cache miss, the source ID **530** may have a value representing a cache miss, e.g., a second value. In some embodiments, the source ID **530** may be used to set a priority of data based on where the request originated. In some embodiments, a request may include the priority score **540.** In some embodiments, a priority score **540** may have the values of highest priority, high priority, low priority, and/or lowest priority. In some embodiments, the priority score **540** may be used to determine a priority of data. In some embodiments, the source ID **530** and the priority score **540** may be used to determine a priority of data.

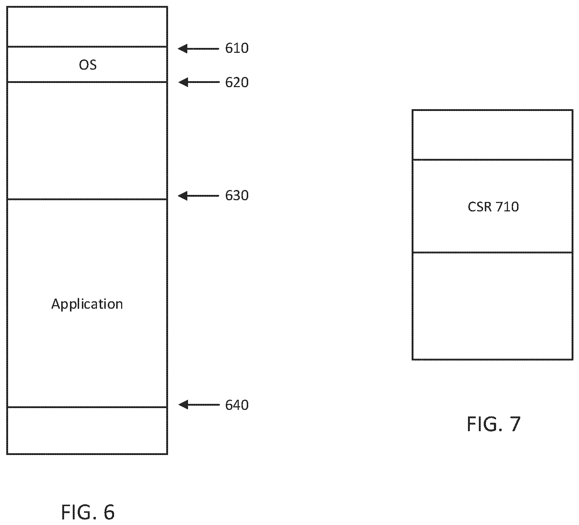

FIG. 6 illustrates an example address range in accordance with example embodiments of the disclosure.

In some embodiments, an OS may know what address range(s) belongs to the OS and what address range(s) is allocated for an application. For example, an OS may have a start range **610** and end range **620.** An application may have a start range **630** and end range **640.** For data operation from the OS, the address of the data may be between the start range **610** and end range **620.** For data operations used by the application, the address of the data may be between the start range **630** and end range **640.** Thus, the OS and application may have separate memory ranges that are allocated for their respective operations.

FIG. 7 illustrates an example of a register for caching on a storage device in accordance with example embodiments of the disclosure.

In some embodiments, one or more control status registers (CSRs) **710** may be used to inform the host of the address range of the OS and one or more applications. When a physical address is received, the one or more CSRs **710** may be checked to determine a priority of the data corresponding to the physical address. For example, if the access is within the address range of the OS, then a priority may be given to the OS accesses over, e.g., an application access. In some embodiments, a software-based solution in which the OS provides the information to the memory device by sending one or more CSRs commands may be used.

In some embodiments, a method in which the cache predictor logic uses the OS page tables stored on the device to predict future accesses may be used.

In some embodiments, the system device may recognize OS data structures stored on the device and apply a different caching scheme compared to the data belonging to applications. For example, slowing down the accesses to some of the OS-related data structures, such as page tables, may be resident on storage media and, thus, the access to the data structure may be slow, impacting the overall performance of the system. This may be due to the system treating all accesses from the application and OS equally from a device caching perspective, demoting some of the OS data from the device cache to slower media (e.g., storage media) in the favor of less critical data belonging to applications.

In some embodiments, a caching technique that prioritizes OS data structures over application data may be used. For example, performance degradation may be high when OS data structures migrate to the slow memory (e.g., from cache memory to storage media). In some embodiments, the memory device may differentiate between the OS and application memory accesses. In some embodiments, OS data structures, such as page tables, resident in the device cache may be used to perform data prefetching and eviction. For example, some of the accesses initiated from the OS may reveal information about future memory accesses, which can be utilized to increase the device cache hit rate. In some embodiments, information about the activity level of memory regions (i.e., pages) may be exploited by the hardware to evict idle pages from the device cache to make room for more active pages (i.e., hot pages).

In some embodiments, the storage device may attempt to minimize the occurrences of demoting the OS data structures to slower memory. In some embodiments, this may include using a dedicated cache for the OS data structures or using methods to not evict the OS data from cache media in favor of the application data. For example, the storage device may favor OS data and application data with high priority scores, and place/retain that data in the cache, to ensure that the data has lower latency than other data (e.g., application data with a low priority score). In some embodiment, the OS may communicate important information to the storage device to increase the device cache hit rate, e.g., using the CSRs.

In some embodiments. mechanisms to improve an application's performance through the caching policy for a tiered memory device may be used. For example, the page tables stored in the storage device may be tracked to identify future data accesses. In some embodiments, this information may be used to prefetch data from slower memory to the faster memory (i.e., cache). In some embodiments, methods to use page table entries stored in the storage device to identify unused (i.e., idle) pages and evict them from the device cache may be used.

In some embodiments, a software-based method using OS may be used. In some embodiments, this method may not require hardware support from the host. In some embodiments, the information regarding the different memory regions including the ones that belong to the OS data structures as well as those belong to the application data may be communicated by the OS to the storage device. In some embodiments, the OS and application may occupy different physical address ranges in the system memory. In some embodiments, once the memory regions are defined and set by the OS, the device driver may notify the device by sending respective commands. In some embodiments, adding commands that inform the device about the start and end address of the regions belong to the OS data structures may be used. Upon receiving the commands, the device may update its internal registers to store this information and use them for future memory references. In some embodiments, one such information may be the range of the physical addresses (begin and end addresses) belonging to the different memory regions. In some embodiments, by having the memory range information, the device may filter the incoming memory requests based on their physical addresses. In some embodiments, if the OS updates the memory address range (e.g., extends one of the address ranges), it may inform the device by sending new commands to update the device side registers. In some embodiments, if no such commands are received by the device, the device may ignore the filtering steps and treat all incoming memory requests equally.

In some embodiments, CSR registers specifying the memory regions may be exposed to the host system software using a memory mapped set of addresses. In some embodiments, the exposed CSRs may be part of one or more memory address ranges advertised by the storage device. In some embodiments, the CSR locations may be at a fixed or partially programmable location (e.g., only the base location is fixed).

In some embodiments, a hardware-based method using MMU may be used. In some embodiments, the MMU may be configured to add additional attributes to identify a source and a priority level may be added to entries, e.g., a page table entry, of the MMU. In other embodiments, a software-based method, using a CSR as described above, may be used.

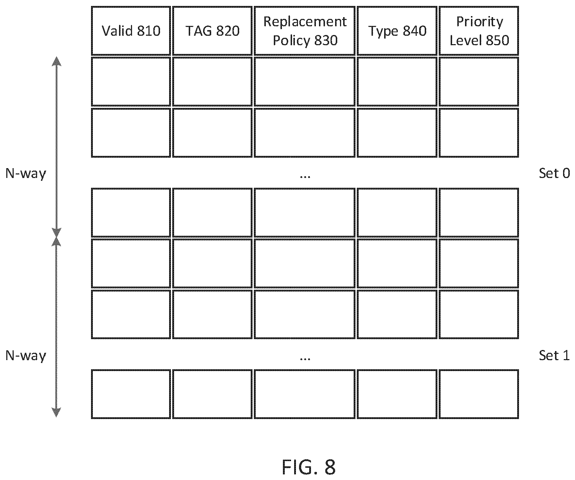

In some embodiments, two caching schemes for the device-side cache may be introduced. For example, in some embodiments, a unified cache may be used. As illustrated below in FIG. 8, the OS and application may be collocated in the same cache. In some embodiments, a separate cache for the OS and a separate cache for application data may be used.

FIG. **8** illustrates a first caching scheme. In FIG. **8****,** the OS and application are collocated in the same cache. In some embodiments, to distinguish between the OS and application, two attributes may be added. In some embodiments, the first attribute may indicate if the data belongs to the OS or the application, e.g., type **840.** In some embodiments, a second attribute to include the priority level of the data set by the OS or MMU may be added, e.g., priority level **850.** In some embodiments, this information may be in addition to standard cache metadata such as the valid bits (e.g., valid **810),** tag bit (e.g., TAG **820),** and replacement policy information (e.g., Least Recently Used (LRU) counters) (e.g., replacement policy **830).** In some embodiments, the device cache controller may utilize this information in different ways. For example, one approach may be to use this information to evict the blocks from the cache to make space for new blocks. In some embodiments, the cache replacement policy may try to keep the OS data in the cache longer than the ones belonging to the application data. In some embodiments, this policy may override the baseline cache eviction policy such as LRU or First-In-First Out (FIFO). In some embodiments, the cache controller may use a hybrid approach that considers both the baseline policy as well as the priority information to pick the candidates for the cache eviction. For example, the cache controller may consider the priority level to decide which block to evict. If all blocks have the same priority level, the controller may use the baseline policy (e.g., LRU) to break the tie.

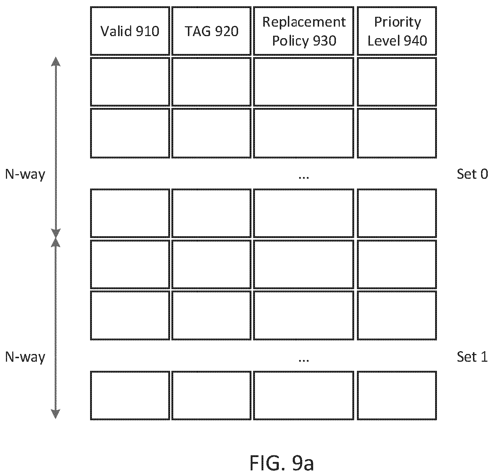

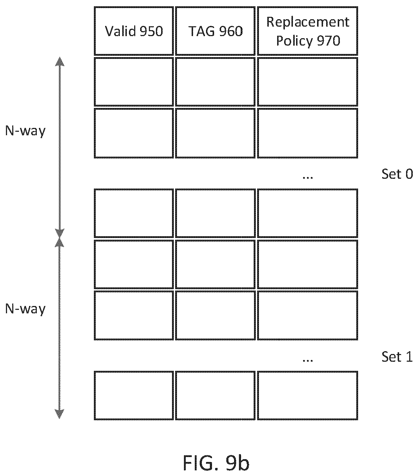

FIGs. **9a** and **9b** illustrate a second caching scheme. In some embodiments, there may be two distinct caches: one for application data (e.g., FIG. **9a****)** and one for OS-related data (e.g., FIG. **9b****).** In some embodiments, the two caches may have different properties such as different size, associativity, etc. In some embodiments, each cache may use different cache policies such as a different replacement policy and writing policy (e.g., one can use a write-back policy while the other uses a write-through policy). In some embodiments, each cache may use different memory technologies (e.g., DRAM, SRAM, etc.). In some embodiments, each cache may share attributes and have different attributes. For example, both caches may have valid bits (e.g., valid **910** and **950),** TAG bits (e.g., TAG **920** and **960),** and/or replacement policy information (e.g., replacement policy **930** and **970).** In some embodiments, the application data cache may have a priority level **940.** In some embodiments, since the OS-related data cache may contain data that may be considered more important than other data, all OS-related data may be stored in the cache. This ensures that OS-related data stays in the faster memory reducing latency for OS-related operations.

In some embodiments, page table accesses may be an indicator of the upcoming memory accesses. In some embodiments, the physical page number that is found in the last level page table entry may be the exact physical address that will be accessed by the host later. In some embodiments, to utilize this knowledge, methods to use the page table information residing in the device may be used to issue prefetch and evict commands to improve the device cache hit rate. In some embodiments, some of the attributes in page table entries may carry some useful information for the cache prediction logic to prefetch or to evict blocks from the cache.

In some embodiments, for the prefetching mechanism, the cache predictor logic may use the attributes in the page table entries to issue prefetch commands to bring that data into the cache in advance. For example, the cache predictor logic may issue a prefetch command with the physical address extracted from the page table entry (i.e., frame number). In some embodiments, the eviction mechanism, eviction commands may be based on the activity level of the page table entries.

In some embodiments, the device cache controller may inform the cache predictor logic of the page table memory accesses. In some embodiments, additional bits in each memory request that separate the OS memory accesses from application data may be integrated. In some embodiments, the cache predictor logic may use the attributes in the page table entries to issue prefetch commands to bring that data into cache in advance. For example, the cache predictor logic may issue a prefetch command with the physical address extracted from the page table entry (e.g., frame number). In some embodiments, addresses that are adjacent to the physical address specified in the page table entry may be prefetched. In some embodiments, if the prefetched addresses already exist in the cache, the cache controller may notify the cache predictor logic and discard the prefetch request.

In some embodiments, the cache predictor logic may evict blocks from the cache to improve cache efficiency. In some embodiments. similar to prefetching, the cache predictor logic may use some of the attributes in the page table entry to make eviction decisions.

In some embodiments, an attribute (such as a _PAGE_ACCESSED attribute) may be used to decide whether to keep or evict a block from the cache. In some embodiments, this attribute may be set by the storage device if the page is accessed. For example, a zero bit may indicate that the page has not been accessed. In some embodiments, the cache predictor logic may use a timer-based eviction policy, where the pages that are not accessed in a certain time window are evicted from the cache. In some embodiments, another attribute (such as a _PAGE_DIRTY attribute) may be used to make eviction decisions. For example, this attribute may be set when a page is written to. In some embodiments, the cache predictor may only evict those pages that are not dirty.

In some embodiments, the cache controller may use the priority information to decide whether to cache or not cache certain data. In some embodiments, a flexible policy to allow caching based on the available empty blocks in the cache may be used. For example, if the cache has a lot of empty blocks, it may allow data with all different priority levels to be stored in the cache. However, when the cache is half or near full, the policy may be changed to only allow the highest priority blocks to be stored in the cache.

In some embodiments, a timer-based replacement policy may be used. In some embodiments, the cache controller may use a timer to evict the blocks from the cache after a certain number of cycles. In some embodiments, the cache controller may choose a longer timer cycle for the blocks with higher priority to allow those blocks to stay longer in the cache.

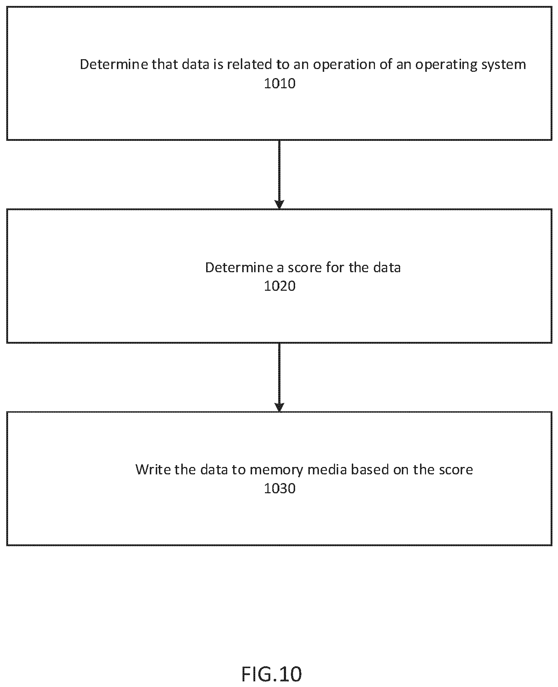

FIG. **10** illustrates a flowchart of prefetching data in accordance with example embodiments of the disclosure. For example, at block **1010,** according to embodiments, a storage device may receive memory address information. For example, the storage device may receive prefetch memory address information from a host device. In some embodiments, the memory address information may be information related to application data used by the host. In some embodiments, the host may send other information that the storage device may use to determine addresses of data to be loaded to the cache on the storage device. In some embodiments, the address information may correspond to data that may be used, using any logic, to determine the next data. In some embodiments, the address information may contain one or more addresses. In some embodiments, the address information may be indications of addresses, which the storage device may translate to addresses on the storage device. In some embodiments, the storage device may use a table to translate the address information on the storage device. In some embodiments, the data used to determine addresses on the storage device can be sent by a host, an internal process, or the storage device itself.

At block **1020,** according to embodiments, the storage device may store the address information in a buffer (e.g., prefetcher queue). In some embodiments, a prefetcher may include a buffer. In some embodiments, the prefetcher may receive that address information from a host and populate the buffer using the address information. In some embodiments, the buffer may be a ring buffer or some other queue to store the address information. In some embodiments, the storage device may load the addresses that are to be retrieved from the storage device. In some embodiments, the buffer can include the message from the host in the storage device. In some embodiments, the buffer can receive an indication of an address, which may be used to determine a real address. Although a first-out (FIFO) queue is described, in some embodiments, the prefetcher may be an ordered list that can be used to store address information on the storage device. In some embodiments, the buffer may contain other information used to retrieve addresses on the storage device.

At block **1030,** according to embodiments, data may be loaded to the memory media from the storage media based on the memory address information. For example, if the buffer contains a memory address, that memory address may be used to load data from the storage media to the cache media. In some embodiments, the buffer may contain other information used to determine address information on the storage media. For example, the buffer may contain an address range.

Thus, in some embodiments, the access latency to the SSD using caching techniques may be minimized. In some embodiments, application performance may be improved by prioritizing critical vs non-critical information for caching. In some embodiments, prefetching and eviction to improve the cache performance may be used. In some embodiments, the total cost of ownership may be lowered by providing a large memory capacity (e.g., expanded memory) using the storage device.

In some embodiments, cache media may be accessed by software using load and/or store instructions, whereas storage media may be accessed by software using read and/or write instructions.

In some embodiments, cache media may be accessed using a memory interface and/or protocol such as double data rate (DDR) of any generation (e.g., DDR4, DDR5, etc.), DMA, RDMA, Open Memory Interface (OMI), CXL, Gen-Z, and/or the like, whereas storage media may be accessed using a storage interface and/or protocol such as serial ATA (SATA), Small Computer System Interface (SCSI), serial attached SCSI (SAS), NVMe, NVMe-oF, and/or the like.

Although some embodiments may be described in the context of cache media that may be implemented with cache media such as DRAM, in other embodiments, other types of media, e.g., storage media, may be used for cache media. For example, in some embodiments, some or all of the memory media **260** may be implemented with media other than cache media that may have one or more relative characteristics (e.g., relative to the storage media **270)** that may make one or both of them more suitable for their respective functions. For instance, in some embodiments, the storage media **270** may have a relatively higher capacity, lower cost, and/or the like, whereas some or all of the memory media **260** may have relatively lower access latency that may make it relatively more suitable for use as a cache.

Storage device **150** as well as any other devices disclosed herein may be used in connection with one or more personal computers, smart phones, tablet computers, servers, server chassis, server racks, datarooms, datacenters, edge datacenters, mobile edge datacenters, and/or any combinations thereof.

Any of the functionality described herein, including any of the user functionality, device functionally, and/or the like (e.g., any of the control logic) may be implemented with hardware, software, firmware, or any combination thereof including, for example, hardware and/or software combinational logic, sequential logic, timers, counters, registers, state machines, volatile memories such DRAM and/or SRAM, nonvolatile memory including flash memory, persistent memory such as cross-gridded nonvolatile memory, memory with bulk resistance change, PCM, and/or the like and/or any combination thereof, complex programmable logic devices (CPLDs), FPGAs, ASICs, central processing units (CPUs) including CISC processors such as x86 processors and/or RISC processors such as ARM processors, graphics processing units (GPUs), neural processing units (NPUs), tensor processing units (TPUs), data processing units (DPUs), and/or the like, executing instructions stored in any type of memory. In some embodiments, one or more components may be implemented as a system on a chip (SoC).

Some embodiments disclosed above have been described in the context of various implementation details such as devices implemented as storage devices that may use specific interfaces, protocols, and/or the like, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific processes, operations, etc., but these terms also encompass embodiments in which a specific process, operation, etc. may be implemented with multiple processes, operations, etc., or in which multiple processes, operations, etc. may be integrated into a single process, step, etc. A reference to a component or element may refer to only a portion of the component or element. For example, a reference to a block may refer to the entire block or one or more subblocks. The use of terms such as "first" and "second" in this disclosure and the claims may only be for purposes of distinguishing the elements they modify and may not indicate any spatial or temporal order unless apparent otherwise from context. In some embodiments, a reference to an element may refer to at least a portion of the element, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner. The various details and embodiments described above may be combined to produce additional embodiments according to the inventive principles of this patent disclosure.

In some embodiments, a portion of an element may refer to less than, or all of, the element. A first portion of an element and a second portion of the element may refer to the same portions of the element. A first portion of an element and a second portion of the element may overlap (e.g., a portion of the first portion may be the same as a portion of the second portion).

In the embodiments described herein, the operations are example operations, and may involve various additional operations not explicitly illustrated. In some embodiments, some of the illustrated operations may be omitted. In some embodiments, one or more of the operations may be performed by components other than those illustrated herein. Additionally, in some embodiments, the temporal order of the operations may be varied. Moreover, the figures are not necessarily drawn to scale.

The principles disclosed herein may have independent utility and may be embodied individually, and not every embodiment may utilize every principle. However, the principles may also be embodied in various combinations, some of which may amplify the benefits of the individual principles in a synergistic manner.

In some embodiments, the latency of a storage device may refer to the delay between a storage device and the processor in accessing memory. Furthermore, latency may include delays caused by hardware such as the read-write speeds to access a storage device, and/or the structure of an arrayed storage device producing individual delays in reaching the individual elements of the array. For example, a first storage device in the form of DRAM may have a faster read/write speed than a second storage device in the form of a NAND device. Furthermore, the latency of a storage device may change over time based on conditions such as the relative network load, as well as performance of the storage device over time, and environmental factors such as changing temperature influencing delays on the signal path.

Although some example embodiments may be described in the context of specific implementation details such as a processing system that may implement a NUMA architecture, storage devices, and/or pools that may be connected to a processing system using an interconnect interface and/or protocol CXL, and/or the like, the principles are not limited to these example details and may be implemented using any other type of system architecture, interfaces, protocols, and/or the like. For example, in some embodiments, one or more storage devices may be connected using any type of interface and/or protocol including Peripheral Component Interconnect Express (PCIe), Nonvolatile Memory Express (NVMe), NVMe-over-fabric (NVMe oF), Advanced eXtensible Interface (AXI), Ultra Path Interconnect (UPI), Ethernet, Transmission Control Protocol/Internet Protocol (TCP/IP), remote direct memory access (RDMA), RDMA over Converged Ethernet (ROCE), FibreChannel, InfiniBand, Serial ATA (SATA), Small Computer Systems Interface (SCSI), Serial Attached SCSI (SAS), iWARP, and/or the like, or any combination thereof. In some embodiments, an interconnect interface may be implemented with one or more memory semantic and/or memory coherent interfaces and/or protocols including one or more CXL protocols such as CXL.mem, CXL.io, and/or CXL.cache, Gen-Z, Coherent Accelerator Processor Interface (CAPI), Cache Coherent Interconnect for Accelerators (CCIX), and/or the like, or any combination thereof. Any of the storage devices may be implemented with one or more of any type of storage device interface including DDR, DDR2, DDR3, DDR4, DDR5, LPDDRX, Open Memory Interface (OMI), NVLink, High Bandwidth Memory (HBM), HBM2, HBM3, and/or the like.

In some embodiments, any of the storage devices, memory pools, hosts, and/or the like, or components thereof, may be implemented in any physical and/or electrical configuration and/or form factor such as a free-standing apparatus, an add-in card such as a PCIe adapter or expansion card, a plug-in device, for example, that may plug into a connector and/or slot of a server chassis (e.g., a connector on a backplane and/or a midplane of a server or other apparatus), and/or the like. In some embodiments, any of the storage devices, memory pools, hosts, and/or the like, or components thereof, may be implemented in a form factor for a storage device such as 3.5 inch, 2.5 inch, 1.8 inch, M.2, Enterprise and Data Center SSD Form Factor (EDSFF), NF1, and/or the like, using any connector configuration for the interconnect interface such as a SATA connector, SCSI connector, SAS connector, M.2 connector, U.2 connector, U.3 connector, and/or the like. Any of the devices disclosed herein may be implemented entirely or partially with, and/or used in connection with, a server chassis, server rack, dataroom, datacenter, edge datacenter, mobile edge datacenter, and/or any combinations thereof. In some embodiments, any of the storage devices, memory pools, hosts, and/or the like, or components thereof, may be implemented as a CXL Type-1 device, a CXL Type-2 device, a CXL Type-3 device, and/or the like.

In some embodiments, any of the functionality described herein, including, for example, any of the logic to implement tiering, device selection, and/or the like, may be implemented with hardware, software, or a combination thereof including combinational logic, sequential logic, one or more timers, counters, registers, and/or state machines, one or more CPLD, FPGA, ASICs, CPU such as CISC processors such as x86 processors and/or RISC processors such as ARM processors, GPUs, NPUs, TPUs and/or the like, executing instructions stored in any type of memory, or any combination thereof. In some embodiments, one or more components may be implemented as a system-on-chip (SOC).

In this disclosure, numerous specific details are set forth in order to provide a thorough understanding of the disclosure, but the disclosed aspects may be practiced without these specific details. In other instances, well-known methods, procedures, components, and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. The terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

When an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" may include any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

The term "module" may refer to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system-on-a-chip (SoC), an assembly, and so forth. Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, e.g., one or more modules of computer-program instructions, encoded on computer-storage medium for execution by, or to control the operation of data-processing apparatus. Alternatively or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.
Thus, particular embodiments of the subject matter have been described herein. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. A method comprising:
determining that data is related to an operation of an operating system;
determining a score (540) for the data; and
writing the data to memory media (260) based on the score (540), wherein the memory media (260) is used as expanded memory,
wherein the data comprises at least one page table, the at least one page table being used to associate the virtual addresses to physical addresses,
wherein the at least one page table comprises one or more entries,
wherein the one or more entries corresponds to data accessed above a threshold, and
wherein the method further comprises writing data corresponding to the data accessed above a threshold from storage media (270) to the memory media (260),
wherein the data is first data;
wherein the score (540) is a first score; and
wherein the method further comprises:
determining that second data is related to an operation of an application;
determining a second score for the second data; and
writing the data to storage media (270) based on the score (540),
wherein the first data uses a first cache;
wherein the second data uses a second cache; and
wherein the first cache applies a different cache replacement policy than the second cache.

2. The method of claim 1,
wherein the first data and second data use a cache (340) comprising at least one of a type (840) and a priority level (850, 940).

3. A system comprising:
a host device (100) comprising one or more circuits configured to associate virtual addresses to physical addresses on a memory device; and
the memory device comprising storage media (270) and memory media (260);
wherein the memory device is configured to perform one or more operations comprising:
receiving data related to an operation of an operating system;
determining a score (540) for the data; and
writing the data to the memory media (260) based on the score (540), wherein the memory media (260) is used as expanded memory (150) on the host device (100),
wherein the data comprises at least one page table, the at least one page table being adapted to be used to associate the virtual addresses to physical addresses,
wherein the at least one page table comprises one or more entries,
wherein the one or more entries corresponds to data accessed above a threshold, and
wherein the memory device is further configured to perform one or more operations comprising writing data corresponding to the data accessed above a threshold from the storage media (270) to the memory media (260),
wherein the data is first data;
wherein the score (540) is a first score; and
wherein the memory device is further configured to perform one or more operations comprising:
receiving second data related to an operation of an application;
determining a second score for the second data; and
writing the data to the storage media (270) based on the score (540),
wherein the first data uses a first cache;
wherein the second data uses a second cache; and
wherein the first cache applies a different cache replacement policy than the second cache.

4. The system of claim 3,
wherein the first data and the second data use a cache (340) comprise at least one of a type (840) and a priority level (850, 940).

## Patentansprüche

1. Verfahren, umfassend:
Bestimmen, dass Daten mit einer Operation eines Betriebssystems in Zusammenhang stehen;
Bestimmen eines Auswertungsergebnisses (540) für die Daten; und
Schreiben der Daten auf Speichermedien (260) auf der Grundlage des Auswertungsergebnisses (540), wobei die Speichermedien (260) als ein erweiterter Speicher verwendet werden,
wobei die Daten mindestens eine Seitentabelle aufweisen, wobei die mindestens eine Seitentabelle dazu verwendet wird, virtuelle Adressen physikalischen Adressen zuzuordnen,
wobei die mindestens eine Seitentabelle einen oder mehrere Einträge aufweist,
wobei der eine oder die mehreren Einträge Daten entsprechen, auf die oberhalb eines Schwellenwerts zugegriffen wird, und
wobei das Verfahren ferner das Schreiben von Daten, die den Daten entsprechen, auf die oberhalb eines Schwellenwerts zugegriffen wird, von Speichermedien (270) auf die Speichermedien (260) umfasst,
wobei es sich bei den Daten um erste Daten handelt;
wobei das Auswertungsergebnis (540) ein erstes Auswertungsergebnis ist; und
wobei das Verfahren ferner umfasst:
Bestimmen, dass zweite Daten mit einer Operation einer Anwendung in Zusammenhang stehen;
Bestimmen eines zweiten Auswertungsergebnisses für die zweiten Daten; und
Schreiben der Daten auf Speichermedien (270) auf der Grundlage des Aufwertungsergebnisses (540),
wobei die ersten Daten einen ersten Cache verwenden;
wobei die zweiten Daten einen zweiten Cache verwenden; und
wobei der erste Cache eine andere Cache-Austauschstrategie anwendet als der zweite Cache.

2. Verfahren nach Anspruch 1,
wobei die ersten Daten und die zweiten Daten einen Cache (340) verwenden, der einen Typ (840) und/oder eine Prioritätsstufe (850, 940) aufweist.

3. System, aufweisend:
eine Host-Vorrichtung (100), die eine oder mehrere Schaltungen aufweist, die so konfiguriert sind, dass sie virtuelle Adressen physikalischen Adressen auf einer Speichervorrichtung zuordnen; und
die Speichervorrichtung, die Speichermedien (270) und Speichermedien (260) aufweist;
wobei die Speichervorrichtung so konfiguriert ist, dass sie eine oder mehrere Operationen durchführt, die umfassen:
Empfangen von Daten, die mit einer Operation eines Betriebssystems in Zusammenhang stehen;
Bestimmen eines Auswertungsergebnisses (540) für die Daten; und
Schreiben der Daten auf die Speichermedien (260) auf der Grundlage des Auswertungsergebnisses (540), wobei die Speichermedien (260) als erweiterter Speicher (150) auf der Hostvorrichtung (100) verwendet werden,
wobei die Daten mindestens eine Seitentabelle aufweisen, wobei die mindestens eine Seitentabelle geeignet ist, um dazu verwendet zu werden, die virtuellen Adressen physikalischen Adressen zuzuordnen,
wobei die mindestens eine Seitentabelle einen oder mehrere Einträge aufweist,
wobei der eine oder die mehreren Einträge Daten entsprechen, auf die oberhalb eines Schwellenwerts zugegriffen wird, und
wobei die Speichervorrichtung ferner so konfiguriert ist, dass sie eine oder mehrere Operationen durchführt, die das Schreiben von Daten, die den Daten entsprechen, auf die oberhalb eines Schwellenwerts zugegriffen wird, von den Speichermedien (270) auf die Speichermedien (260) umfassen,
wobei es sich bei den Daten um erste Daten handelt;
wobei das Auswertungsergebnis (540) ein erstes Auswertungsergebnis ist; und
wobei die Speichervorrichtung ferner so konfiguriert ist, dass es eine oder mehrere Operationen durchführt, die umfassen:
Empfangen von zweiten Daten, die mit einer Operation einer Anwendung in Zusammenhang stehen;
Bestimmen eines zweiten Auswertungsergebnisses für die zweiten Daten; und
Schreiben der Daten auf die Speichermedien (270) auf der Grundlage des Auswertungsergebnisses (540),
wobei die ersten Daten einen ersten Cache verwenden;
wobei die zweiten Daten einen zweiten Cache verwenden; und
wobei der erste Cache eine andere Cache-Austauschstrategie anwendet als der zweite Cache.

4. System nach Anspruch 3,
wobei die ersten Daten und die zweiten Daten einen Cache (340) verwenden, der einen Typ (840) und/oder eine Prioritätsstufe (850, 940) aufweist.

## Revendications

1. Procédé comprenant :
déterminer que des données sont liées à une opération d'un système d'exploitation ;
déterminer un score (540) pour les données ; et
écrire les données sur un support mémoire (260) sur la base du score (540), dans lequel le support mémoire (260) est utilisé en tant que mémoire étendue,
dans lequel les données comprennent au moins une table de pages, ladite au moins une table de pages étant utilisée pour associer les adresses virtuelles à des adresses physiques,
dans lequel ladite au moins une table de pages comprend une ou plusieurs entrées,
dans lequel la ou les entrées correspondent à des données dont l'accès dépasse un seuil, et
dans lequel le procédé comprend en outre l'écriture, depuis un support de stockage (270) vers le support mémoire (260), de données correspondant aux données dont l'accès dépasse un seuil,
dans lequel les données sont des premières données ;
dans lequel le score (540) est un premier score ; et
dans lequel le procédé comprend en outre :
déterminer que des deuxièmes données sont liées à une opération d'une application ;
déterminer un deuxième score pour les deuxièmes données ; et
écrire les données sur un support de stockage (270) sur la base du score (540),
dans lequel les premières données utilisent une première mémoire cache ;
dans lequel les deuxièmes données utilisent une deuxième mémoire cache ; et
dans lequel la première mémoire cache applique une politique de remplacement de cache différente de celle de la deuxième mémoire cache.

2. Procédé selon la revendication 1,
dans lequel les premières données et les deuxièmes données utilisent une mémoire cache (340) comprenant au moins un élément parmi un type (840) et un niveau de priorité (850, 940).

3. Système comprenant :
un dispositif hôte (100) comprenant un ou plusieurs circuits configurés pour associer, sur un dispositif de mémoire, des adresses virtuelles à des adresses physiques ; et
ledit dispositif de mémoire comprenant un support de stockage (270) et un support mémoire (260) ;
dans lequel le dispositif de mémoire est configuré pour effectuer une ou plusieurs opérations comprenant :
recevoir des données liées à une opération d'un système d'exploitation ;
déterminer un score (540) pour les données ; et
écrire les données sur le support mémoire (260) sur la base du score (540),
dans lequel le support mémoire (260) est utilisé en tant que mémoire étendue (150) sur le dispositif hôte (100),
dans lequel les données comprennent au moins une table de pages, ladite au moins une table de pages étant adaptée pour être utilisée afin d'associer les adresses virtuelles à des adresses physiques,
dans lequel ladite au moins une table de pages comprend une ou plusieurs entrées,
dans lequel la ou les entrées correspondent à des données dont l'accès dépasse un seuil, et
dans lequel le dispositif de mémoire est en outre configuré pour effectuer une ou plusieurs opérations comprenant l'écriture, depuis le support de stockage (270) vers le support mémoire (260), de données correspondant aux données dont l'accès dépasse un seuil,
dans lequel les données sont des premières données ;
dans lequel le score (540) est un premier score ; et
dans lequel le dispositif de mémoire est en outre configuré pour effectuer une ou plusieurs opérations comprenant:
recevoir des deuxièmes données liées à une opération d'une application ;
déterminer un deuxième score pour les deuxièmes données ; et
écrire les données sur le support de stockage (270) sur la base du score (540),
dans lequel les premières données utilisent une première mémoire cache ;
dans lequel les deuxièmes données utilisent une deuxième mémoire cache ; et
dans lequel la première mémoire cache applique une politique de remplacement de cache différente de celle de la deuxième mémoire cache.

4. Système selon la revendication 3,
dans lequel les premières données et les deuxièmes données utilisent une mémoire cache (340) comprenant au moins un élément parmi un type (840) et un niveau de priorité (850, 940).
